(19) Europäisches Patentamt
European Patent Office
Office européen des brevets

(11) Publication number: **0 126 625 B1**

(12) **EUROPEAN PATENT SPECIFICATION**

(45) Date of publication of patent specification: **04.09.91**

(51) Int. Cl.5: **C08G 8/28**, C08G 8/10, C08G 8/20, C08G 8/22, C08G 8/04

(21) Application number: **84303352.3**

(22) Date of filing: **17.05.84**

(54) **Method for the production of phenolic compounds and resins.**

(30) Priority: **18.05.83 JP 87978/83**
**22.12.83 JP 242535/83**

(43) Date of publication of application:
**28.11.84 Bulletin 84/48**

(45) Publication of the grant of the patent:
**04.09.91 Bulletin 91/36**

(84) Designated Contracting States:
**DE FR GB IT NL**

(56) References cited:
**DE-A- 2 107 915**
**DE-A- 2 310 743**
**DE-A- 2 534 559**
**DE-A- 2 647 321**
**DE-B- 2 320 009**

**PATENT ABSTRACTS OF JAPAN, vol. 3, no. 75 (C-50), 27th June 1979, page 93 C 50; & JP - A - 54 50591 (TOSHIBA CHEMICAL K.K.) 20-04-1979**

**PATENT ABSTRACTS OF JAPAN, vol. 3, no. 75 (C-50), 27th June 1979, page 29 C 50; & JP - A - 54 48893 (MITSUI TOATSU KAGAKU K.K.) 17-04-1979**

(73) Proprietor: **SUMITOMO CHEMICAL COMPANY, LIMITED**
**Kitahama 4-chome 5-33**
**Chuo-ku Osaka 541(JP)**

(72) Inventor: **Harada, Haruhisa**
**No. 7-23-5, Aobadai**
**Ichihara-shi Chiba(JP)**
Inventor: **Sasaki, Shigeru**
**No. 1-9, Yushudai Nishi**
**Ichihara-shi Chiba(JP)**
Inventor: **Hiroshi, Maki**
**No.1353-4, Shiizu**
**Ichihara-shi Chiba(JP)**

(74) Representative: **Diamond, Bryan Clive et al**
**Gee & Co., Chancery House, Chancery Lane**
**London WC2A 1QU(GB)**

**EP 0 126 625 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of producing phenolic resins which are useful as coatings, adhesives and molding materials.

DE-B-2320009 (=GB-A-1431874) discloses a method of producing phenolic resins (resols) by reacting a condensate of $\alpha,\alpha$-dihydroxy diisopropyl benzenes with excess of a phenol having at least two free ortho- or para-positions with formaldehyde preferably in the presence of a basic catalyst.

A known method for the production of phenolic resins comprises reacting a phenol compound with an alkylating agent, such as formaldehyde, in the presence of an acidic catalyst. It has been desired to improve the flexibility and heat resistance of such phenolic resins; we have found that a specific compound obtainable from diisopropylbenzene can be used in place of aldehydes such as formaldehyde, to produce phenolic resins markedly improved in flexibility and heat resistance.

This invention provides a method for producing a phenolic resin from a phenolic product which was produced by reacting a phenol compound of the formula (A):

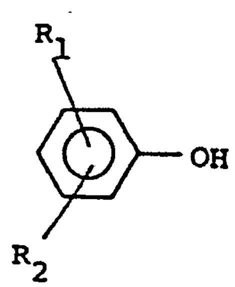

(A)

(wherein $R_1$ is a hydrogen atom, an alkyl Group of 1 to 8 carbon atoms, an alkenyl group of up to 8 carbon atoms, a hydroxy group, or a group of the formula

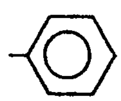 , 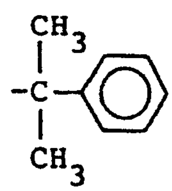

or

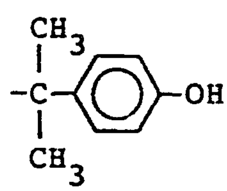 ;

and $R_2$ is a hydrogen atom, an alkyl group of 1 to 8 carbon atoms or an alkenyl group of up to 8 carbon atoms) with a compound of the formula (B):

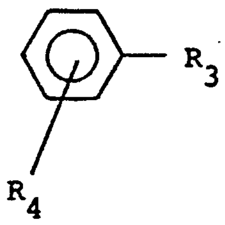

(B)

(wherein $R_3$ and $R_4$ each is

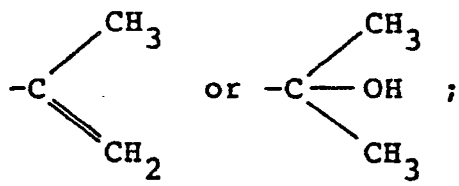

$R_3$ and $R_4$ may be the same or different) in the presence of an acidic catalyst;

the resulting product is reacted with an aldehyde compound in the presence of the phenol compound of formula (A) and in the presence of an acidic catalyst.

The phenol compound of the formula (A) is exemplified by phenol, cresol, ethylphenol, isopropylphenol, isopropenylphenol, tert-butylphenol, octylphenol, xylenol, resorcinol, catechol, hydroquinone, phenylphenol, cumylphenol and 4,4'-dihydroxydiphenyl-2,2-propane.

The compound of the formula (B) is exemplified by 1,3-diisopropenylbenzene, 1,4-diisopropenylbenzene, 3-(2-hydroxy-2-propyl)isopropenylbenzene, 4-(2-hydroxy-2-propyl)-isopropenylbenzene, 1,3-di(2-hydroxy-2-propyl)benzene and 1,4-di(2-hydroxy-2-propyl)benzene. These compounds may be used either alone or in combination.

The compound (B) may be prepared, for example, by dehydrogenating diisopropylbenzene, or by air oxidation of diisopropylbenzene to obtain an oxidation product of the formula (C),

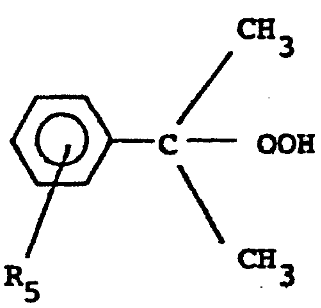

(C)

(wherein $R_5$ is

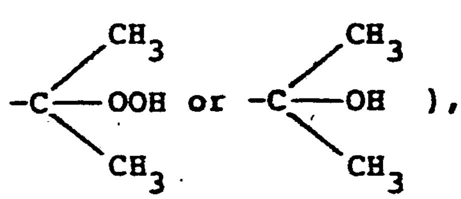

followed by reduction with sodium sulfite, hydrogen or the like. Moreover, the compound (B) having the carbinol group

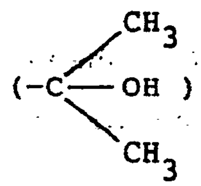

can be dehydrated to give the corresponding compound (B) having the olefinic group

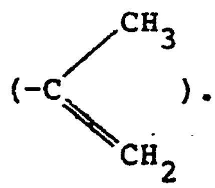

In the process for production of the phenolic product from the phenol compound (A) and the compound (B) with the aid of an acidic catalyst, the molar ratio of (A) to (B) is not particularly limited, and may be decided depending on the desired properties of the resulting product. The amount of the phenol compound (A) can be increased with increase of heat resistance. Generally speaking, the compound (B) may be used in an amount of 0.05 to 3 moles per mole of the phenol compound (A).

The acidic catalyst usable for this reaction includes, for example, a mineral acid such as sulfuric acid, hydrochloric acid, phosphoric acid, etc., a solid acid such as silica-alumina, acid clay, etc., an organic acid such as formic acid, oxalic acid, p-toluenesulfonic acid, etc., or a Friedel-Crafts catalyst such as aluminum chloride, iron chloride, zinc chloride, etc. The amount of the catalyst is virtually optional and may be selected according to the properties of the product and the reaction temperature. Generally speaking, the acidic catalyst is used in a proportion of 0.001 to 300 parts by weight per part by weight of a mixture of (A) and (B).

The reaction can be conducted at a temperature in the range of 0 to 180 °C. Generally speaking, when the reaction is carried out at a lower temperature, the acidic catalyst is used in a larger amount in order to enhance the reaction efficiency, while at a higher reaction temperature a smaller amount of the acidic catalyst is used. When the compound (B) is a carbinol, the by-product water may be removed from the reaction mixture to ensure an efficient progress of the reaction. It is also possible to add a suitable organic solvent such as benzene, toluene, hexane, heptane, etc. for the purpose of ensuring a smooth progress of the reaction. The reaction may be carried out at atmospheric pressure. In order to remove water formed as a by-product, if any, from the reaction system, the reaction can be carried out under reduced pressure. Further, when the acidic catalyst is a gas, the reaction can also be carried out under elevated pressure.

The reaction, product between (A) and (B) can be neutralized with an alkali and dehydrated in vacuo under heating, followed by cooling, and thus, the desired solid or liquid phenolic product can be obtained.

If desired, the phenolic product obtained may be subjected to removal of the organic solvent, if any, and distillation to remove the unreacted phenol compound. The resulting product may be further subjected to recrystallization with an organic solvent to give a refined phenolic product.

Then, the thus obtained phenolic product can be subjected to reaction with an aldehyde compound in the presence of the phenol compound (A).

The reaction can be carried out in a conventional manner for producing a novolak type resin. The ratio of the reaction product between (A) and (B) to the phenol compound (A) is virtually optional and dependent on the intended use of the resulting phenolic resin.

The amount of the aldehyde compound used in this reaction is not limited, and according to the intended use of the phenolic resin, the ratio of the total number of -OH groups in the reaction product of (A) and (B) and -OH groups in the phenol compound (A) to the number of aldehyde groups may be within a range of 1:0.1 to 1.0 for the reaction in the presence of an acidic catalyst.

The aldehyde compound usable in the production of a phenolic resin in accordance with this invention may be any of the common aldehydes such as formaldehyde, paraformaldehyde or furfural

The acidic catalyst can be , for example, sulfuric acid, hydrochloric acid, oxalic acid, formic acid or p-toluenesulfonic acid.

The reaction can be carried out at a temperature of 80 °C to a reflux temperature for 30 minutes to 4 hours. Then, the reaction mixture may be neutralized, washed with water and dehydrated under reduced pressure, followed by cooling, whereby a solid or liquid phenolic resin can be obtained.

Both phenolic product and phenolic resin according to this invention can be used for a variety of uses because of characteristic features due to the presence of -OH groups, residual unsaturated groups and bonds of the formula

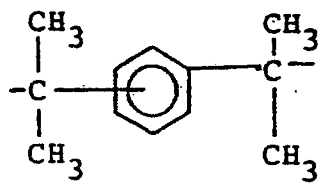

in the molecule. A typical application of these products is that of improving or modifying the conventional phenolic resins.

For example, the phenolic products according to this invention can be used, either as they are or in combination with a conventional novolak resin obtained by reacting a phenol with formaldehyde under acidic conditions, as a shell mold binder, and in this application, the products of this invention act to increase the strength of the sand mold and also as a low expansion agent. Moreover, the products according to this invention, as they are or in combination with the novolak resin, can be cured with hexamethylenetetramine so as to provide a cured product markedly improved in the heat resistance. In a still another application, a product according to this invention can be used as a curing component for urethane and epoxy resins for the purpose of improving the heat resistance of coatings, molding compounds, laminates, etc. Apart from the applications utilizing its reactivity, the phenolic products according to this invention can also be added to hot melt adhesives or rubber-based adhesives, or used as phenolic resins modified with formaldehyde, rosin or cashew oil.

Thus, the phenolic products according to this invention can be used in a variety of applications such as coatings, molding compounds, laminates, adhesives, molding sand binders, etc.

The following examples are illustrative.

Reference Example.

A reaction vessel equipped with a thermometer, stirrer and reflux condenser was charged with 752.9 g (8.0 moles) of phenol, 194.3 g (1.0 mole) of 1,3-di(2-hydroxy-2-propyl)benzeneand, as a solvent, 1200 ml of toluene, and while hydrogen chloride gas was bubbled into the mixture, the reaction was conducted in the temperature range of 25 to 30 °C for 2 hours. After completion of the reaction, the reaction mixture was neutralized with a 10% aqueous solution of NaOH and washed with water. Then, the water, solvent and unreacted phenol were removed under heating in vacuo, and the residue was recrystallized from toluene to give 225 g of 1,3-di(2-p-hydroxyphenyl-2-propyl)benzene [hereinafter referred to as compound (a)] with a molecular weight of 346. m.p. 137-140 °C. Further, 125 g of compound-(b) including 69 weight% of 1,3-di(2-p-hydroxyphenyl-2-propyl)benzene was recovered from the recrystallization mother liquor. The above product compound was submitted to the reaction according to this invention.

Example 1

A reaction vessel was charged with 27.7 g (0.08 mole) of compound-(a) prepared in the Reference Example and 79.0 g (0.84 mole) of phenol, and after dissolution under heating, 1.0 g of oxalic acid was added as a catalyst, followed by addition of 67.4 g of 37% formalin (0.83 mole). The reaction was conducted under reflux for 1.5 hours.

After completion of the reaction, the reaction mixture was washed twice with 200 ml portions of warm water by the decantation method and then dehydrated in vacuo under heating to give 105 g of a clear, light ochre solid resin. The softening point of this resin was 107 °C.

Example 2

A reaction vessel was charged with 29.6 g of compound-(b) (0.16 mole as -OH) prepared in the Reference Example and 79.0 g (0.84 mole) of phenol, followed by addition of 1.0 g of oxalic acid and 67.4 g (0.83 mole) of 37% formalin. Then, the same procedure as Example 1 was followed to give 102 g of a clear, light ochre solid resin. The softening point of this resin was 102 °C.

Example 3.

Using phenol and 1,4-di(2-hydroxy-2-propyl)benzene, the same reaction and after-treatment as Example 1 were carried out to give compound-(c) including 83 weight% of 1,4-di(2-p-hydroxyphenyl-2-propyl)-benzene (the "compound-(c)" means the concentrate obtainable after removal of the water, solvent and unreacted phenol in vacuo under heating).

A reaction vessel was charged with 21.6 g of the above compound-(c) (0.12 mole as -OH), 82.8 g (0.88 mole) of phenol, 1.0 g of oxalic acid and 67.4 g (0.83 mole) of 37% formalin. Then, the same procedure as Example 2 was followed to give 107 g of a clear, light ochre solid resin. The softening point of this resin was 113° C.

Example 4

Using 648.8 g (6.0 moles) of p-cresol, 194.3 g (1.0 mole) of 1,3-di(2-hydroxy-2-propyl)benzene and, as a solvent, 1000 ml of toluene, the same reaction and after-treatment as in the Reference Example were carried out to give compound-(d) including 87 weight% of 1,3-di[2-(2-hydroxy-5-methylphenyl)-2-propyl]-benzene. [The compound-(d) means the concentrate after removal of the water, solvent and, p-cresol, in vacuo under heating.]

A reaction vessel was charged with 23.4 g of the above compound-(d) (0.12 mole as -OH) and 95.1 g (0.88 mole) of p-cresol, followed by addition of 1.5 g of oxalic acid and 67.4 g (0.83 mole) of 37% formalin, and the reaction was conducted under the same conditions as in Example 2. The above procedure gave 96 g of a clear, light ochre solid resin. The softening point of this resin was 109° C.

Example 5

A reaction vessel was charged with 330.1 g (3 moles) of resorcinol, 194.3 g (1.0 mole) of 1,3-di(2-hydroxy-2-propyl)benzene, 1000 ml of benzene (as solvent) and 1000 ml of concentrated hydrochloric acid, and the reaction was conducted at 5° C for 15 hours. After completion of the reaction, the ochre-colored oil, layer was separated and neutralized with a hot aqueous solution of sodium carbonate. Then, the unreacted resorcinol contained in the oil layer was removed by washing with hot water and the oil layer was cooled in an ice-bath, whereupon a light ochre solid separated out. Filtering the mixture gave light ochre compound-(e).

This product-(e) included 95 weight% of 1,3-di[2-(2,4-dihydroxyphenyl)-2-propyl]benzene.

A reacting vessel was charged with 29.8 g (0.3 mole as -OH) of the above compound-(e) and 77.1 g (0.7 mole) of resorcinol, followed by addition of 1.0 g of oxalic acid and 67.4 g (0.83 mole) of 37% formalin, and the procedure of Example 1 was followed to give 110 g of a light ochre solid resin. This resin had a sofening point of 101° C.

Example 6

A reaction vessel was charged width 44.4 g (0.24 mole as -OH) of the compound-(b) prepared in Example 11 and 71.5 g (0.76 mole) of phenol, followed by addition of 1.0 g of oxalic acid and 67.4 g (0.83 mole) of 37% formalin. Then, the same procedure as in Example 1 was followed to give 113 g of a clear, light ochre solid resin. The softening point of this resin was 104° C. This resin was evaluated as to its performance qualities in shell mold and molding compound applications.

[Evaluation for shell mold use]

To 3000 weight parts of preheated No. 7 silica sand (150° C) were added 50 weight parts of the above solid resin and 50 weight parts of a commercial novolak resin, followed by addition of 60 weight parts of a 20% aqueous solution of hexamethylenetetramine. The mixture was further admixed well and when the silica sand grains had just become loosened, 3 weight parts of calcium stearate was added. The performance of the resulting resin-coated silica sand was examined in regard to the heat treatment time with a metal mold at 250° C and the hot strength at 250° C. A control test was performed using the novolak resin and hexamethylenetetramine. The comparison of the two products showed that the use of the solid resin according to this invention results in a sufficient strength with a lesser amount of hexamethylenetetramine.

Table 6

Strength of molded sand (hot bending strength)

| No. | Proportions of components (weight parts) | | | Strength of molded sand | |
|---|---|---|---|---|---|
| | Solid resin according to this invention | Novolak resin | Hexamethylene-tetramine | Heat treating time (second) | Bending strength ($kg/cm^2$) |
| 1 | 50 | 50 | 12 | 30 | 15 |
| | | | | 60 | 38 |
| 2 | - | 100 | 12 | 30 | 11 |
| | | | | 60 | 29 |
| 3 | - | 100 | 16 | 30 | 13 |
| | | | | 60 | 34 |

[Evaluation for molding use]

The same solid resin was used for modifying the phenolic resin molding compound. As shown below, the use of the solid resin according to this invention resulted in improved heat resistance and bending strength.

(1) Preparation and molding of test molding compounds

The compounds shown in Table 7 were kneaded on a twin-roll mill (110-120°C) for 5 minutes, cooled and crushed to give molding compounds. Each of these molding compounds was compression-molded at 180 kg/cm²G at 170 °C for 2 minutes.

Table 7

Formulation of Molding Compounds

(Unit: weight parts)

| No. | 1 | 2 |
|---|---|---|
| Solid resin of this invention | 40 | - |
| Novolak resin | 60 | 100 |
| Hi-Silica ® | 250 | 250 |
| Calcium stearate | 3 | 3 |
| Hexamethylenetetramine | 15 | 15 |

(2) Physical properties of molded products

The physical properties of molded products obtained are shown in Table 8.

Table 8

Physical Properties of Molded Products

(as determined in accordance with JIS K-6911-1979)

| No. | 1 | 2 |
|---|---|---|
| Heat deformation temperature (°C) | 183 | 158 |
| Barcol hardness | 92 | 89 |
| Bending strength ($kg/mm^2$) | 18 | 14 |

## Claims

1. A method of producing a phenolic resin from a phenolic product which was produced by reacting a phenol compound of the formula (A);

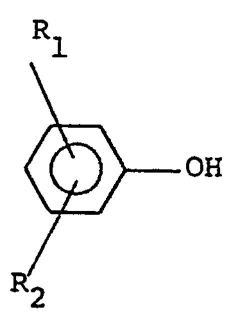

(A)

wherein $R_1$ is a hydrogen atom, an alkyl group of 1 to 8 carbon atoms, an alkenyl group of up to 8 carbon atoms, a hydroxy group, or a group of the formula

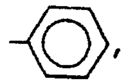, 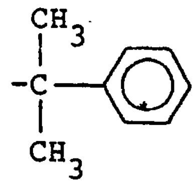

or

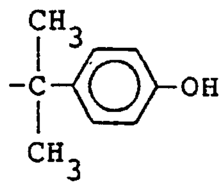;

and $R_2$ is a hydrogen atom, an alkyl group of 1 to 8 carbon atoms or an alkenyl group of up to 8 carbon atoms, with a compound of the formula (B);

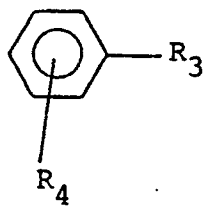

(B)

wherein $R_3$ and $R_4$ each is

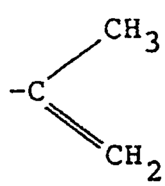 or 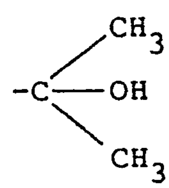 ;

and $R_3$ and $R_4$ may be the same or different, in the presence of an acidic catalyst; which method comprises reacting said phenolic product with an aldehyde compound in the presence of an acidic catalyst and the phenol compound of formula (A).

**2.** A method as claimed in Claim 1, wherein said aldehyde compound is formaldehyde, paraformaldehyde or furfural.

**3.** A method as claimed in Claim 1 or 2, wherein the acidic catalyst used in the reaction of said reaction product with said aldehyde compound is sulfuric acid, hydrochloric acid, oxalic acid, formic acid or p-toluenesulfonic acid.

**4.** A method as claimed in any preceding claim, wherein the reaction of said reaction product with said aldehyde compound in the presence of acidic catalyst is conducted with the ratio of the total number of -OH groups in said reaction product between (A) and (B) and those in said phenol compound of the formula (A) to the number of aldehyde groups in said aldehyde compound being in the range of 1:0.1 to 1.0.

## Revendications

1. Une méthode de production d'une résine phénolique à partir d'un produit phénolique qui est produit par réaction d'un composé phénol de formule (A) :

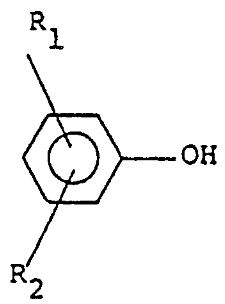

(A)

dans laquelle $R_1$ est un atome d'hydrogène, un groupe alkyle de 1 à 8 atomes de carbone, un groupe alcényle jusqu'à 8 atomes de carbone, un groupe hydroxyle ou un groupe de formule

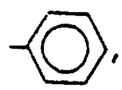
,
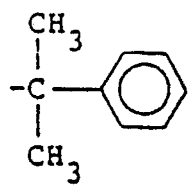
ou,
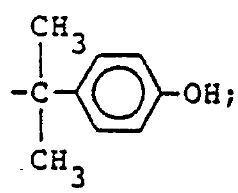
;

et $R_2$ est un atome d'hydrogène, un groupe alkyle de 1 à 8 atomes de carbone ou un groupe alcényle pouvant atteindre 8 atomes de carbone, avec un composé de formule (B) :

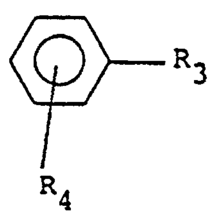

(B)

dans laquelle $R_3$ et $R_4$ représentent chacun

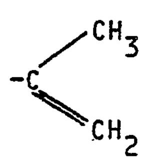
ou
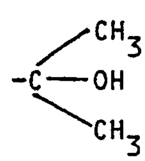
;

et $R_3$ et $R_4$ peuvent être identiques ou différents, en présence d'un catalyseur acide ; ladite méthode comprend la réaction dudit produt phénolique avec un composé aldéhyde en présence d'un catalyseur acide et du composé phénol de formule (A).

2. Une méthode selon la revendication 1, selon laquelle ledit composé aldéhyde et le formaldéhyde, le paraformaldéhyde ou le furfural.

3. Une méthode selon la revendication 1 ou, 2, selon laquelle le catalyseur acide utilisé dans la réaction dudit produit réactionnel avec ledit composé aldéhyde est l'acide sulfurique, l'acide chlorhydrique, l'acide oxalique, l'acide formique ou l'acide p-toluènesulfonique.

4. La méthode selon l'une quelconque des revendications précédentes, selon laquelle la réaction dudit produit réactionnel avec ledit composé aldéhyde en présence du catalyseur acide est conduite avec un rapport entre le nombre total des groupes -OH dans ledit produit de réaction entre (A) et (B) et de ceux dudit composé phénol de formule (A) et le nombre des groupes aldéhydes dans ledit composé aldéhyde étant dans l'intervalle de 1 : 0,1 à 1,0.

**Patentansprüche**

1. Verfahren zur Herstellung eines Phenolharzes aus einem Phenolprodukt, das hergestellt wurde durch Umsetzen einer Phenolverbindung der Formel (A)

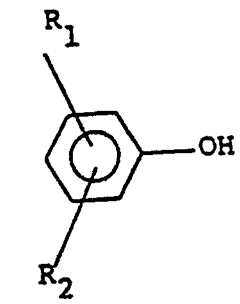

(A)

in der $R_1$ ein Wasserstoffatom, einen Alkylrest mit 1 bis 8 Kohlenstoffatomen, einen Alkenylrest mit höchstens 8 Kohlenstoffatomen, eine Hydroxylgruppe, oder eine Gruppe der Formeln

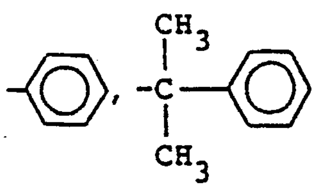

oder

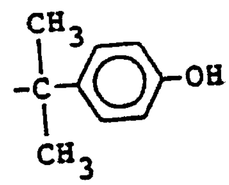

bedeutet und $R_2$ ein Wasserstoffatom, einen Alkylrest mit 1 bis 8 Kohlenstoffatomen oder einen Alkenylrest mit höchstens 8 Kohlenstoffatomen bedeutet, mit einer Verbindung der Formel (B)

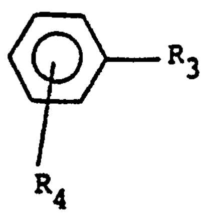

(B)

in der $R_3$ und $R_4$ jeweils

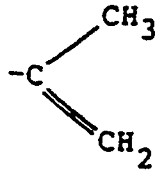

oder

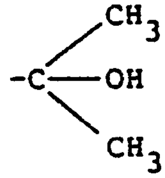

bedeutet und $R_3$ und $R_4$ gleich oder verschieden sein können, in Gegenwart eines saueren Katalysators, wobei das Verfahren die Umsetzung des Phenolproduktes mit einer Aldehydverbindung in Gegenwart eines saueren Katalysators und der Phenolverbindung der Formel (A) umfaßt.

2. Verfahren nach Anspruch 1, wobei die Aldehydverbindung Formaldehyd, Paraformaldehyd oder Furfural ist.

3. Verfahren nach Anspruch 1 oder 2, wobei der bei der Umsetzung des Reaktionsproduktes mit der Aldehydverbindung verwendete sauere Katalysator, Schwefelsäure, Salzsäure, Oxalsäure, Ameisensäure oder p-Toluolsulfonsäure ist.

4. Verfahren nach einem der vorstehenden Ansprüche, wobei die Umsetzung des Reaktionsproduktes mit der Aldehydverbindung in Gegenwart eines saueren Katalysators durchgeführt wird, wobei das Verhältnis der Gesamtzahl der -OH-Gruppen in dem Reaktionsprodukt aus (A) und (B) und denen in der Phenolverbindung der Formel (A) zu der Zahl der Aldehydgruppen in der Aldehydverbindung in dem Bereich von 1:0,1 bis 1,0 liegt.